# EUROPÄISCHE PATENTSCHRIFT

(11) **EP 3 051 340 B1**
(45) Veröffentlichungstag und Bekanntmachung des Hinweises auf die Patenterteilung: **06.12.2017**
(21) Anmeldenummer: 15000265.7
(22) Anmeldetag: 29.01.2015
(51) Int. Cl.: G03B 11/04

(54) **Rückzugsrolle mit einem Gehäuse für Objektivdeckel**
Retraction roller comprising a housing for lens cap
Rouleau de remontée doté d'un boîtier pour couvercle d'objectif

(43) Veröffentlichungstag der Anmeldung: 03.08.2016
(73) Patentinhaber: Biro, Britta, 90449 Nürnberg (DE); Puri, Madalina, 90439 Nürnberg (DE)
(72) Erfinder: Biro, Britta, 90449 Nürnberg (DE); Puri, Madalina, 90439 Nürnberg (DE)
(74) Vertreter: Meyer, Rudolf

(56) Entgegenhaltungen:
- WO-A1-97/42852
- JP-A- 2007 156 306
- JP-A- 2008 242 127
- JP-A- 2010 008 676
- US-A- 5 833 165
- US-A1- 2003 019 893
- US-A1- 2010 059 564

## Beschreibung

Die Erfindung betrifft einen Objektivdeckel mit einer Rückzugsrolle mit einem Gehäuse zur Beaufschlagung einer an der Rückzugsrolle befestigten Verbindungsschnur mit einer Rückzugskraft, wobei die Verbindungsschnur an der im Gehäuse drehbar gehaltenen und vorgespannten Rückzugsrolle befestigt ist. Desweiteren betrifft die Erfindung ein Kameraobjektiv mit wenigstens einem solchem Objektivdeckel.
Rückzugsrollen werden im Allgemeinen dazu eingesetzt, handhabbare Dinge unverlierbar befestigen zu können und gleichzeitig die Entfernung des handhabbaren Gegenstandes aus einem Betätigungsbereich oder einer Gefahrenzone zu gewährleisten. Rückzugsrollen weisen ein Gehäuse auf, in welchem die Verbindungsschnur zum Beispiel mit deren einen Ende befestigt ist. Die Rückzugsrolle ist im Gehäuse drehbar gehalten und gegenüber diesem vorgespannt. Eine Zugbewegung der Verbindungsschnur aus dem Gehäuse heraus führt zu einer weiteren Vorspannung der Rückzugsrolle gegenüber der Verbindungsschnur, so dass bei Nachlassen der Zugkraft von außen eine Aufrollbewegung in entgegengesetzter Richtung unterstützt wird. Während des Aufrollvorgangs vermindert sich die Vorspannungskraft und die Verbindungsschnur wird zumindest teilweise auf der Rückzugsrolle aufgerollt. Das Gehäuse weist die Funktion auf, zum einen die Rückzugsrolle drehbar zu halten, aber auch, um diese vor Außeneinwirkungen zu schützen.
An einem außerhalb des Gehäuses angeordneten Ende der Verbindungsschnur wird ein Gegenstand befestigt, den es zu handhaben gilt. Dabei kann es sich um einen Schlüssel, einen Skipass oder anderweitige Nutzungsgegenstände handeln, die sowohl unverlierbar als auch rückstellbar in einem bestimmten Betätigungsbereich eingesetzt werden. Dieser Betätigungsbereich kann beispielsweise ein Lesegerät, ein Schloss oder dergleichen sein. Aufgrund des jeweiligen Anwendungsfeldes ergibt sich eine Handhabungsproblematik, die die Handhabung des jeweiligen Gegenstandes erschwert, die aber aufgrund der Rückzugsrolle erleichtert werden kann.

Aus GM 79 18 477 U1 ist ein Skipasshalter bekannt, der zur Befestigung an einem Reisverschluss eines Kleidungsstückes vorgesehen ist und eine Rückzugsrolle enthält.

Aus EP 1 024 720 B1 ist eine Rückzugsrolle für Schlüssel bekannt, die beispielsweise an einem Gürtel befestigbar ist und Schlüssel unverlierbar aber aufgeräumt am Gürtel einer Person befestigt.

Objektivdeckelhalterungen haben die Funktion Objektivdeckel unverlierbar an der Kamera oder an einem Trageriemen der Kamera zu befestigen, so dass der,Objektivdeckel in jeder Verwendungssituation unverlierbar gesichert ist.

Aus US 4327960 A ist ein Objektivdeckel bekannt, der über eine klebende Fläche mit einem Band verbunden ist, wobei das Band wiederum über ein Befestigungselement am Kameraobjektiv befestigt ist. Damit wird der Objektivdeckel wenn er als solcher nicht gebraucht wird, unverlierbar mit dem Kameraobjektiv verbunden. Desweiteren weist das verbindende Band eine Form auf, die es erlaubt in windigen Situationen eine Verwickelung des Bandes nachhaltig zu verhindern.

Aus US 5805944 A1 ist eine Kamera bekannt, die ein am Gehäuse befestigtes Band aufweist, wobei der Objektivdeckel ist in das Band integriert ist.

Aus JP 2010 28 20 22 A ist ein Objektivhalter für eine Kamera bekannt, dessen Verbindungsschnur, die Kamera und Objektivdeckel verbindet, in der Länge verstellbar ist.
Aus JP 2000 19 40 35 A ist ein Objektivdeckelhalter bekannt, dessen Verbindungsschnur über ein Verbindungselement mit einem Gürtel verbunden ist. Die Verbindungsschnur kann auf Zug an der Verbindungsschnur zwischen dem Verbindungselement und dem Objektivdeckel verkürzt werden. Dabei ist die Verbindungsschnur in dem Verbindungselement derart feststellbar, dass eine nachträgliche Verlängerung des Verbindungsschnurstückes zwischen dem Verbindungselement und dem Objektivdeckel nicht mehr möglich ist.

In JP 2008 242127 A und in JP 2007 156306 A sind Rückzugsrollen für Objektivdeckel für das vorteilhaftere Handling in Verbindung mit Kameras offenbart, wobei die Objektivdeckel die Rückzugsrolle enthalten können.
Aufgabe der Erfindung ist es, einen Objektivhalter anzugeben, der die Sicherheit, die Zuverlässigkeit und den Komfort bei der Benutzung einer Kamera steigert.

Die Aufgabe wird durch einen Objektivdeckel gemäß Anspruch 1 gelöst. Die Verbindungsschnur ist dafür vorgesehen, das erste Verbindungselement mit der Rückzugsrolle zu verbinden, wobei durch die Vorspannung der Rückzugsrolle das Stück Verbindungsschnur zwischen dem ersten Verbindungselement und dem Gehäuse der Rückzugsrolle stets vorteilhaft reduzierbar ist. Die Verbindungsschnur kann hierbei unterschiedlich ausgeführt sein, beispielsweise kann sie aus einem Garn, einem Kunststoff oder Gummi bestehen, wobei stets eine Aufrollbarkeit auf die Rückzugsrolle gewährleistet ist. Ferner kann die Verbindungsschnur aus einer Mehrzahl von Verbindungsschnüren gebildet sein, wobei sich die Verbindungsschnüre auf die drehbar gehaltene und vorgespannte Rückzugsrolle im Gehäuse auf- und abwickeln können.

Die Verbindungschnur besteht beispielsweise teilweise oder ganz aus einem natürlichen Rohstoff, wie zum Beispiel Tierwolle, Baumwolle, Gummi oder Sisal, oder einem Kunststoff, wie zum Beispiel Polyamid.

Die Rückzugskraft wird durch die Vorspannung der Rückzugsrolle hervorgerufen, wobei hierfür beispielsweise eine Feder, insbesondere eine Spiralfeder, vorgesehen ist. Ein erstes Verbindungselement kann sowohl am Gehäuse oder an der Verbindungsschnur fest sein. Ist das erste Verbindungselement am Gehäuse fest, so kann das Gehäuse mit Rückzugsrolle am Objektivdeckel befestigt werden und die Entfernung des Objektivdeckels zum ersten Verbindungselement vorteilhaft kurz halten. Dies ist insbesondere bei größeren Objektivdeckeln vorteilhaft, zumal das zusätzliche Gewicht der Rückzugsrolle und deren Gehäuse nicht zu stark ins Gewicht fällt, wenn es gilt, die Verbindungsschnur beziehungsweise das Stück Verbindungsschnur zwischen dem ersten Verbindungselement und der Rückzugsrolle, zu verkürzen.
Alternativ ist das erste Verbindungselement an der Verbindungsschnur oder an einem Ende der Verbindungsschnur fest. Diese Form der Befestigung eignet sich bei kleinen und leichten Objektivdeckeln, sodass diese sehr schnell und mit geringer Vorspannung der Rückzugsrolle zurückgezogen werden können. Dazu muss die Rückzugsrolle selbst nur rotativ bewegt werden, aber die Entfernungsverkürzung zwischen erstem Verbindungselement und Rückzugsrolle geht auf die Bewegung des ersten Verbindungselementes zusammen mit dem Objektivdeckel zurück. Das erste Verbindungselement ist zur Herstellung einer ersten Verbindung ausgebildet, wobei die erste Verbindung entweder eine kraftflüssige Verbindung oder eine elastisch formschlüssige Verbindung ist. Kraftschlüssige Verbindungen sind beispielsweise Verbindungen basierend auf einem Unterdruck, wie es beispielsweise bei einem Saugnapf in Kombination mit einer korrespondierenden Fläche oder eines Gegensaugnapfes der Fall ist. Durch das Applizieren einer Kraft, die nicht in eine spezielle Richtung gerichtet sein muss, kann die kraftschlüssige Verbindung wieder rückgängig gemacht werden. Ein anderes Beispiel einer kraftschlüssigen Verbindung ist eine Verbindung basierend auf einem Klettverschluss oder basierend auf einem Klebstoff. Bei einer Klettverbindung werden eine Vielzahl von Haken in einer Vielzahl von Ösen eines Gegenstückes eingehängt, wobei eine Verformung der Haken dazu führt, das durch eine Krafteinwirkung der vorhandene Kraftschluss rückgängig gemacht werden kann. Bei einer kraftschlüssigen Verbindung basierend auf einen Klebstoff ist beispielsweise eine Kunststoffoberfläche vorgesehen, die mit einem Klebstoff beschichtet ist, der wiederum mit einer Folie oder einem Papier derart abgedeckt ist, dass er erst bei der Herstellung der ersten Verbindung durch das Abziehen der Folie beziehungsweise des Papiers aktiviert wird.

Alternativ ist zur Herstellung der ersten Verbindung eine elastisch formschlüssige Verbindung vorgesehen, wie sie beispielsweise bei Druckknöpfen umgesetzt ist. Bei einem Druckknopf wird ein endseitig verdickter Zapfen in eine Aufnahme eines Niet oder eines Kopfes eingeführt, wobei durch entsprechende Rückhalteelemente ein Formschluss in der Aufnahme gegenüber dem Zapfen hergestellt wird. Die Rückhalteelemente und/oder der Zapfen sind jedoch elastisch beanspruchbar, so dass der Formschluss durch eine Beanspruchung des Zapfens und/oder der Rückhalteelemente wieder rückgängig gemacht und somit die erste Verbindung wieder gelöst werden kann.

Bei einer vorteilhaften Ausführungsform ist die erste Verbindung eine lösbare Verbindung. Unter einer lösbaren Verbindung wird eine Verbindung verstanden, deren an der ersten Verbindung teilnehmenden Bestandteile nach einer Lösung der ersten Verbindung nicht zerstört werden und wieder für die Herstellung der ersten Verbindung einsetzbar sind. Vorteilhafterweise kann somit die erste Verbindung bei Bedarf hergestellt oder auch wieder gelöst werden. Somit kann die Rückzugsrolle in Verbindung mit verschiedenen Objektivdeckeln eingesetzt werden, wobei der jeweils in Gebrauch befindliche Objektivdeckel vorteilhaft bei Bedarf mit der Verbindungsschnur der Rückzugsrolle verbunden werden kann.

Bei einer vorteilhaften Ausführungsform weist das erste Verbindungselement einen Bestandteil eines Druckknopfes, einen Bestandteil eines Klettverschlusses oder einen Saugnapf auf. Damit wird gewährleistet, dass die erste Verbindung eine lösbare Verbindung ist und dass die Rückzugsrolle flexibel einsetzbar ist und nicht für jedes einzelne Kameraobjektiv angeschafft werden muss. Der Bestandteil des Druckknopfes kann hierbei der vorher erwähnte endseitig verdickte Zapfen oder die Zapfenaufnahme, beispielsweise in Form eines Niets, sein. Der Bestandteil des Klettverschlusses kann sowohl eine flächige Anordnung von kleinen Haken und/oder kleinen Laschen aufweisen, die sich mit dem jeweiligen Gegenstück verhaken können. Der Saugnapf kann dazu ausgebildet sein, in Verbindung mit einem anderen Saugnapf oder einer ebenen Fläche einen Unterdruck zu bilden, der den Saugnapf an den anderen Saugnapf oder an der genannten Fläche festzumachen.

Grundsätzlich wird in der Optik unter Objektiv eine Linse verstanden, die im Rahmen einer Anordnung optischer Linsen, diejenige Linse darstellt, die am nächsten am Objekt angeordnet ist. Unter Kameraobjektiv wird eine Aufnahme einer Anordnung von Linsen verstanden, die ein solches Objektiv enthält und mit einer Kamera verbindbar ist. Die im Kameraobjektiv angeordneten optischen Linsen sind in Gruppen oder einzeln zueinander entlang der optischen Achse verschiebbar.
Bei einer vorteilhaften Ausführungsform ist ein für die erste Verbindung passendes Gegenstück zum ersten Verbindungselement an einem Objektivdeckel befestigbar oder fest. Das passende Gegenstück variiert im Hinblick auf die erste Verbindung. Das jeweilige, passende Gegenstück wurde bereits im vorhergehenden Absatz genannt.

Bei einem nicht erfindungsgemäßen Beispiel ist das Gegenstück zum ersten Verbindungselement in den Objektivdeckel integriert. Da es sich hierbei um eine lösbare, erste Verbindung handelt, ist es möglich, dass mehrere Objektivdeckel mit dem ersten Verbindungselement ausgeführt werden, so dass eine erste Verbindung immer dann hergestellt wird, wenn der jeweilige Objektivdeckel verwendet werden soll. Somit ist nur eine Rückzugsrolle erforderlich, die fest an der Kamera oder am Fotograf befestigt werden kann.
Bei einer vorteilhaften Ausführungsform ist die erste Verbindung eine unlösbare, kraftschlüssige Klebeverbindung. Dabei handelt es sich um eine sehr einfache erste Verbindung, die kostengünstig hergestellt werden kann. Außerdem bildet eine unlösbare, kraftschlüssige erste Verbindung ein sehr stabiles System aus Rückzugsrolle und Objektivdeckel. Folglich ist eine solche erste unlösbare, kraftschlüssige Klebeverbindung für Objektdeckel vorteilhaft, die einem Kameraobjektiv mit einem großen Brennweitenintervall angehören.
Die Aufgabe wird des Weiteren bei einer Rückzugsrolle der eingangs genannten Art dadurch gelöst, dass das Gehäuse in einen Objektivdeckel integriert ist oder zumindest teilweise oder ganz als Objektivdeckel ausgebildet ist. Dies eignet sich insbesondere bei Universaldeckeln, die dazu ausgebildet sind, auf eine Mehrzahl von Kameraobjektiven aufgesetzt zu werden. Aufgrund der Integration der Rückzugsrolle ist eine Handhabe besonders einfach, wobei zudem das Kameraobjektiv mit aufgesetztem Objektivdeckel ohne weiteres auf diesen aufgestellt werden kann. Befände sich eine auf dem Objektivdeckel befestigte Rückzugsrolle auf dem Objektivdeckel, so würde das Kameraobjektiv keinen sicheren Stand haben. Diesen Nachteil vermeidet die in den Objektivdeckel integrierte Rückzugsrolle auf vorteilhafte Weise.

Bei einer vorteilhaften Ausführungsform ist die Rückzugsrolle mittels eines zweiten Verbindungselementes befestigbar. Das zweite Verbindungselement kann beispielsweise ein Karabiner oder dergleichen sein, der sich leicht an einem Tragegurt oder an einem Kleidungsstück befestigen lässt. Auf diese Weise kann der Nutzer entscheiden, wo er den Objektivdeckel in zurückgezogener Position antreffen möchte.

Bei einer vorteilhaften Ausführungsform ist die Rückzugsrolle zentrisch im Objektivdeckel angeordnet. Eine zentrische Anordnung der Rückzugsrolle ist eine in Bezug zu den Objektivdeckelrändern radial mittige Anordnung. Damit ist das Trägheitsmoment des Objektivdeckels für eine einfache Handhabung optimiert. Ferner bieten sich Öffnungen für die Verbindungschnur im radial äußeren Bereich des Gehäuses oder des Objektivdeckels an, um eine optimale Auf- und Abwicklung auf der Rückzugsrolle zu gewährleisten.

Bei einer vorteilhaften Ausführungsform ist die Rückzugsrolle am Gehäuse oder im Gehäuse radial nach außen versetzt. Dies ist vorteilhaft, wenn der Innenraum des Objektivdeckels für Handhaben oder andere Funktionselemente benötigt wird. Außerdem eignet sich der zentrische Bereich des Objektivdeckels dadurch für eine Öffnung für die Verbindungschnur. Dies ist insbesondere dann vorteilhaft, wenn sich der Objektivdeckel entgegen der Gravitation seiner Endposition nähern soll, beispielsweise an einer Unterseite einer Umhängetasche oder dergleichen. Dabei wird die Verbindungschnur von der Rückzugsrolle aufgerollt und in das Gehäuse gezogen. In Bezug zum Gehäuse verringert sich der außen gelegene Teil der Verbindungsschnur und verkürzt damit den Abstand des Objektivdeckels zu seiner Endposition, wobei sich der Objektivdeckel in einer im Wesentlichen horizontalen Ausrichtung, ohne Verwicklungsgefahr für die Verbindungsschnur, halten kann.

Bei einer erfindungsgemäßen Ausführungsform ist eine Öffnung für die Verbindungsschnur auf einer Aufstandsseite des Gehäuses angeordnet. Die Aufstandsseite des Objektivdeckels steht im Wesentlichen auf der optischen Achse senkrecht und ist dazu vorgesehen auf einer ebenen Fläche stabil aufzuliegen. Dies kann mit einem planen Kontakt oder einem Mehrfachkontakt diverser Elemente, wie zum Beispiel Stege, des Objektivdeckels auf der ebenen Fläche gewährleistet sein. Ist die Verbindungschnur dünn genug, wird sie beim Aufsetzen des Objektivdeckels mit daran angeschlossenem Kameraobjektiv zwischen Aufstandsseite und ebener Fläche zu keiner statischen Destabilisierung des Kameraobjektivs beitragen. Zudem lässt sich eine dünne Verbindungsschnur leichter im Gehäuse verstauen.

Bei einem nicht erfindungsgemäßen Beispiel ist die Öffnung für die Verbindungsschnur auf einer zylindrischen oder einer konischen Fläche des Gehäuses angeordnet. Somit ist die Verbindungsschnur dicker auslegbar und kann mit größerer Rückzugskraft durch die Rückzugsrolle aufgerollt werden. Alternativ kann der Objektivdeckel größer oder schwerer sein, wird aber dennoch sicher aus dem Handhabungsbereich der Kamera entfernt. Vorteilhafterweise gelangt die Verbindungsschnur beim Aufstellen des Kameraobjektivs mit dem verbundenen Objektivdeckel nach unten auf eine ebene Fläche nicht zwischen die Aufstandsfläche des Objektivdeckels und die ebene Fläche. Ein sicherer Stand des Kameraobjektivs ist damit ebenfalls gewährleistet.

Bei einer vorteilhaften Ausführungsform ist der Objektivdeckel zur Befestigung auf einem Kameraobjektiv ausgebildet und deckt in der auf dem Kameraobjektiv befestigten Position endseitig eine Linse des Kameraobjektivs schützend ab. Dabei können unterschiedlichste Befestigungsvorrichtungen zum Einsatz kommen. Beispielsweise kann der Objektivdeckel auf einem Bajonettverschluss basieren oder schlicht auf das Kameraobjektiv aufsteckbar sein. Alternativ ist auch eine Vorrichtung denkbar, die einem Formschluss herstellt, womit der Objektivdeckel in seiner schützenden Position besonders gesichert ist.

Die Aufgabe wird desweiteren durch ein Kameraobjektiv mit wenigstens einem Objektivdeckel gelöst, wobei der Objektivdeckel eine erfindungsgemäße Rückzugsrolle aufweist. Es bietet sich an, das Kameraobjektiv mit einem Objektivdeckel im Set zu nutzen, wobei die Rückzugsrolle bereits im Objektivdeckel integriert ist. Somit kann gerade bei teueren Kameraobjektiven ein Verlieren des Objektivdeckels vermieden und gleichzeitig deren Handhabe vereinfacht werden.

Weitere vorteilhafte Ausbildungen und Weiterbildungen der Erfindung sind in den Unteransprüchen und/oder der Figurenbeschreibung zu entnehmen. Gleiche Bezugszeichen in unterschiedlichen Figuren beziehen sich auf gleiche Elemente oder Bauteile. Es zeigen:
- Fig. 1: einen Objektivdeckel mit integrierter Rückzugsrolle,
- Fig. 2: den Objektivdeckel aus Fig. 1 aus einer zweiten Perspektive,
- Fig. 3: einen Objektivdeckel mit zentrisch angeordnetem Auslass der Verbindungsschnur,
- Fig. 4: eine Spielreflexkamera mit Teleobjektiv, welches mittels eines Objektivdeckels geschützt ist,
- Fig. 5: die Kamera aus Fig. 1 mit zurückgezogenem Objektivdeckel während der Kameranutzung,
- Fig. 6: einen Objektivdeckel mit lösbar befestigter Rückzugsrolle,
- Fig. 7: den Objektivdeckel aus Fig. 6 mit Rückzugsrolle aus einer zweiten Perspektive,
- Fig. 8: die Kamera aus Fig. 4 mit einer auf dem Objektivdeckel aufgeklebten Rückzugsrolle,
- Fig. 9: vier Objektivdeckel, die alle zumindest einen Teil des Gehäuses ausbilden und die Rückzugsrollen jeweils unterschiedliche Positionen innerhalb des Gehäuses einnehmen,
- Fig. 10: zwei Objektivdeckel mit von außen angebrachten Gehäusen, und
- Fig. 11: vier Objektivdeckel mit unterschiedlichen Öffnungen für die Verbindungsschnur.

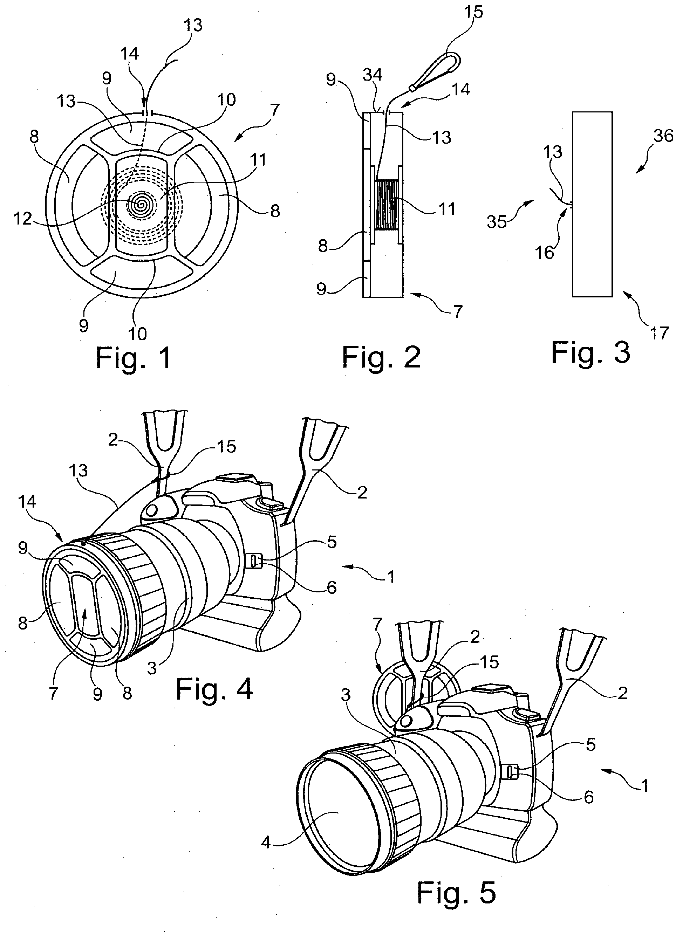

Fig. 1 und 2 zeigen einen Objektivdeckel 7 mit Handhaben 8 und Aussparungen 9 auf der vom Kameraobjektiv abgewandten Seite. Die Handhaben 8 und die sich ebenfalls gegenüberliegenden Aussparungen 9 sind voneinander mittels Stegen 10 separiert. Durch die radial außenliegende Öffnung 14 führt die Verbindungsschnur 13 von außen in den Objektivdeckel 7, der in Bezug zur Rückzugsrolle 11 ein Gehäuse bildet. Die Rückzugsrolle 11 ist gegenüber dem Objektivdeckel 7 mittels einer Spiralfeder 12 derart vorgespannt, dass eine Rückstellkraft auf die Verbindungsschnur 13 wirkt. Die Verbindungsschnur 13 ist teilweise durch den Objektivdeckel 7 verdeckt. In Abhängigkeit des Aufrollzustandes der Rückzugsrolle 11 befindet sich mehr oder weniger Verbindungsschnur innerhalb des Objektivdeckels 7.

Die Handhaben 8 können vorteilhafterweise zur Betätigung eines Formschlusses verwendet werden, der zur Arretierung des Objektivdeckels 7 auf einem Kameraobjektiv vorgesehen ist.

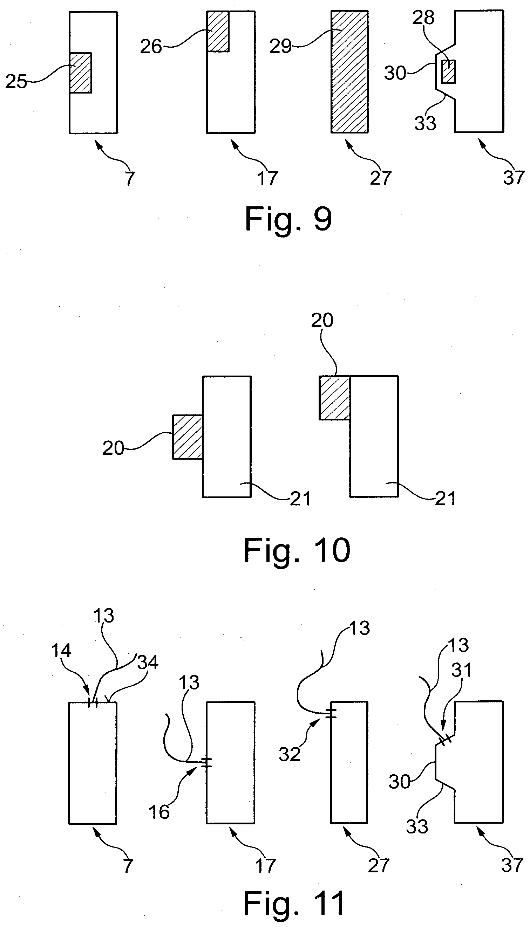

Fig. 3 zeigt einen Objektivdeckel 17, der eine zentrische Öffnung 16 aufweist, aus der die Verbindungsschnur 13 herausführt. Dies kann zur Anordnung des Objektivdeckels 17 in eingezogener Position vorteilhaft sein, wobei die nicht abgebildete Rückzugsrolle beispielsweise nicht zentrisch innerhalb des Objektivdeckels 17 angeordnet ist. Eine zentrische Anordnung einer Rückzugsrolle ist jedoch nicht zwingend erforderlich. In diesem Zusammenhang wird weiter auf die Ausführungsbeispiele der Figuren 9 und 10 verwiesen.

Fig. 4 zeigt eine Spiegelreflexkamera mit einem teilweise abgebildeten Tragegurt 2, die auf dem Kameraobjektiv 3 den Objektivdeckel 7 aus den Fig. 1 und 2 aufweist. Durch die Betätigung der Handhaben 8 kann der Objektivdeckel 7 vorteilhafter Weise aus einer arretierten Position auf dem Kameraobjektiv 3 entfernt werden, um durch die Rückzugskraft das Stück der Verbindungsschnur 13 zwischen dem Karabiner 15 und der Öffnung 14 zu verkürzen.

Fig. 5 zeigt die Kamera 1 aus Fig. 1 mit deren Kameraobjektiv 3, wobei nunmehr der Deckel 7 aufgrund der Verbindungsschnurverkürzung in der Nähe des Tragegurtes 2 angeordnet ist und die Linse 4 für den Strahlungseinfall freigegeben ist. In diesem Zustand kann der Fotograf ohne auf den Objektivdeckel zu achten sehr komfortabel fotografieren.

Alternativ ist der Karabiner 15 nicht am Tragegurt 2, sondern in der Senke 5 befestigbar, indem der Befestigungsstift 6 vom Karabiner 15 umschlossen wird.

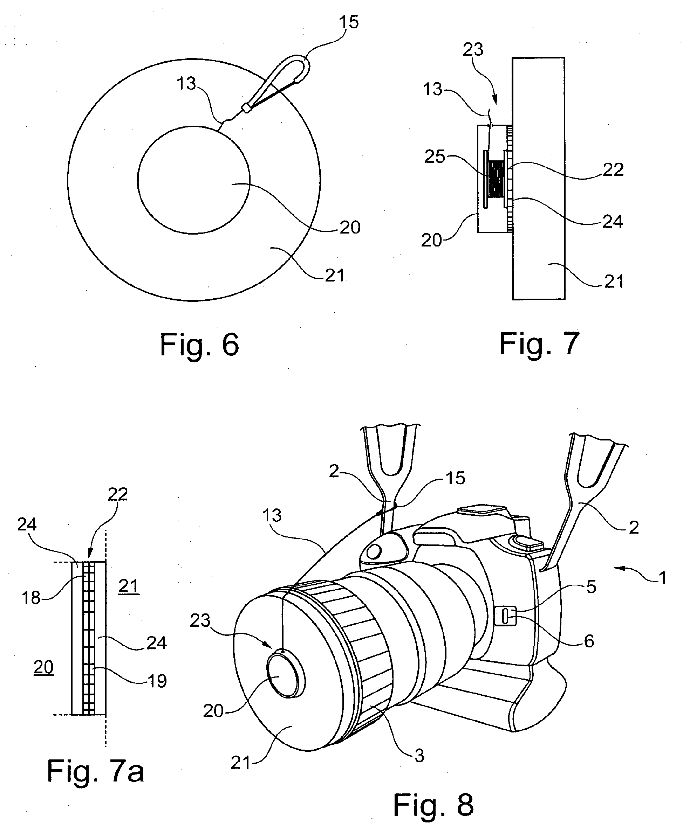

Fig. 6 und Fig. 7 zeigen einen Objektivdeckel 21 mit einer Gehäuse 20 einer Rückzugsrolle 25, wobei das Gehäuse 20 zentrisch auf dem Objektdeckel 21 angeordnet ist. Der Karabiner 15 verhindert das Eintauchen des außenseitigen Endes der Verbindungsschnur 13 in das Gehäuse 20, beziehungsweise erlaubt durch das applizieren einer Kraft die Verlängerung des Stückes der Verbindungsschnur 13, die teilweise außerhalb des Gehäuses 20 angeordnet ist.

Fig. 7 und 7a zeigen einen Querschnitt durch das Gehäuse 20 der Fig. 6, wobei die Rückzugsrolle 25 und auch die Wicklungen der Verbindungsschnur 13 zu erkennen sind.

Das Gehäuse 20 ist mittels einer Klettverbindung 22 am Objektivdeckel 21 befestigt, wobei das Gegenstück 19 mittels einer Klebeschicht 24 auf dem Objektivdeckel 21 fest ist, aber eine lösbare Verbindung mit dem ersten Verbindungselement 18 eingeht, welches entweder am Gehäuse 20 mit einer weiteren Klebeschicht 24 befestigt oder alternativ in das Gehäuse 20 integriert ist. Das erste Verbindungselement 18 und dessen Gegenstück 19 bilden die erste Verbindung, die lösbar ist und bei Bedarf hergestellt werden kann. Auf diese Weise ist es möglich, dass das Gehäuse 20 bei Bedarf auf den Objektivdeckel 21 oder einen anderen Objektivdeckel aufgesetzt und an selbigem befestigt werden kann.

Alternativ sind andere erste Verbindungen möglich, wie zum Beispiel eine Saugnapfverbindung oder eine permanente Klebeverbindung.
Fig. 8 zeigt die Kamera 1 aus den Fig. 4 und 5, wobei der Objektivdeckel 21 mit dem aufgebrachten Gehäuse 20 versehen ist. Wenn man bedenkt, dass Objektivdeckel 21, 7, 17 oftmals auf dem Kameraobjektiv 3 verbleiben, wenn das Kameraobjektiv 3 von der Kamera 1 entfernt worden ist, so ist es vorteilhaft, wenn das Kameraobjektiv 3 auf den jeweiligen Objektivdeckel 7, 17, 21 gestellt werden kann. Hierbei bildet der Objektivdeckel 7 aus Fig. 1 und 2 eine vorteilhafte, nicht erfindungsgemäße Ausführungsform, weil die Oberfläche des Objektivdeckels 7 ein flächiges Aufstellen des Kameraobjektivs 3 erlaubt und zudem die Öffnung 14 radial außen an einer zylindrischen Außenfläche 34 des Objektivdeckels 7 angeordnet ist. Bei allen anderen Objektivdeckeln 17, 25 besteht das Problem, dass das Kameraobjektiv 3 leicht zur Seite, über der Aufstandsfläche geneigt sein kann, wenn diese einseitig uneben sind oder eine dicke Verbindungsschnur 13 aufweisen. Somit verhindert der Objektivdeckel 7 ein nachteiliges Kippen des Kameraobjektivs 3, wenn das Kameraobjektiv 3 auf den verbundenen Objektivdeckel 7 gestellt wird. Hierbei sind nicht nur die zumindest einseitig weitgehend in einer Ebene liegenden Stege 10 einem sicheren Stand des Kameraobjektivs 3 einträglich, sondern auch die Position der Öffnung 16 für die Verbindungsschnur 13. Ist diese auf einer zumindest teilweise radial nach außen ausgerichteten Oberfläche oder sogar am Objektivrand angeordnet, wie zum Beispiel auch in Fig. 2, kann die Dicke der Verbindungschnur 13 weitgehend frei gewählt werden, ohne den sicheren Stand des Kameraobjektivs 3 zu gefährden.
Fig. 9 zeigt vier Objektivdeckel 7,17,27,37, die jeweils eine Rückzugsrolle 25,26,29,28 beinhalten. Die Rückzugsrolle 25 ist zentrisch im Objektivdeckel 7 angeordnet. Die Rückzugsrolle 26 ist radial nach außen verschoben angeordnet, also dezentral im als Objektivdeckel 17 ausgebildeten Gehäuse 17 angeordnet. Der Objektivdeckel 27 ist mit dem Gehäuse 27 der Rückzugsrolle 29 identisch. Die Rückzugsrolle 28 ist zentrisch und teilweise innerhalb einer zentrischen Erhebung 30 des Objektivdeckels 37 angeordnet. Hierdurch kann der Objektivdeckel 37 sehr flach ausgelegt oder mit weiteren Funktionselementen versehen werden.

Fig. 10 zeigt einen Objektivdeckel 21 mit einem von außen permanent oder lösbar befestigen Gehäuse 20, welches eine drehbare Rückzugsrolle enthält. In Abhängigkeit der fotographischen Anwendung oder Belieben des Fotographen, kann das Gehäuse 20 mittels der ersten Verbindung, beispielsweise mit einem nicht abgebildeten Klettverschluss oder einem Saugnapf am Objektivdeckel zentrisch oder radial außen befestigt werden. Ferner kann alternativ der Objektivdeckel 21 derart ausgebildet sein, das das Gehäuse 20 und der Objektivdeckel 21 gemeinsam eine im Wesentlichen ebene Aufstandsfläche gemeinsam ausbilden.

Fig. 11 zeigt die vier Objektdeckel 7,17,27,37 mit beispielhaft am Gehäuse 7,17,27,37 beziehungsweise am Objektivdeckel 7,17,27,37 angeordneten Öffnungen 14,16,31,32. Vorteilhafterweise sind besagte Öffnungen 14,16,31,32 in Abhängigkeit der Position der nicht abgebildeten Rückzugsrollen wählbar. Zusätzlich können auch andere Kriterien in Betracht gezogen werden. Beispielsweise verhindert die zentrische Erhebung 30 in Verbindung mit der konischen Fläche 33, dass die Verbindungsschnur 13 beim Hinstellen des Kameraobjektivs mit Objektivdeckel 37 eingeklemmt wird. Eine radial außen angeordnete Öffnung 32, die in die Aufstandsfläche des Objektivdeckels 27 eingebracht ist, wirkt bei der Rückzugsrolle, die um die optische Achse des Kameraobjektivs 3 dreht, als Zugbremse, um ein allzu festes Aufprallen des Objektivdeckels 27 in seiner Endposition zu verhindern.

Fig. 9,10 und 11 zeigen eine Vielzahl von Objektivdeckeln 7,17,21,27,37, die alle in der gleichen Art und Weise orientiert sind. Für den Betrachter linksseitig sind die Aufstandsflächen angeordnet, auf dem der Objektivdeckel 7,17,21,27,37 aufliegt, wenn das Kameraobjektiv 3 aufrecht steht und der Objektivdeckel 7,17,21,27,37 am Kameraobjektiv 3 befestigt ist. Folglich ist für den Betrachter rechtseitig der jeweilige Objektivdeckel 7,17,21,27,37 zur Befestigung mit dem Kameraobjektiv 3 ausgebildet.

Zusammenfassend betrifft die Erfindung einen Objektivdeckel mit einer Rückzugsrolle 26, 29 mit einem Gehäuse 17, 27 zur Beaufschlagung einer an der Rückzugsrolle 26, 29 befestigten Verbindungsschnur 13 mit einer Rückzugskraft, wobei die Verbindungsschnur 13 an der im Gehäuse drehbar gehaltenen und vorgespannten Rückzugsrolle befestigt ist. Es soll die Handhabung und der Kamerabetrieb vereinfacht werden. Die Erfindung schlägt vor, dass das Gehäuse 17, 27 in einen Objektivdeckel 17, 27 integriert ist oder zumindest teilweise oder ganz als Objektivdeckel 17, 27 ausgebildet ist. Der Nutzer einer Kamera 1 kann sich nunmehr darauf verlassen, dass der Objektivdeckel 17, 27 nicht verloren geht und ferner auch nicht im Bedienbereich der Kamera 1 im Wege ist.

### Bezugszeichenliste

- 1: Kamera
- 2: Tragegurt
- 3: Kameraobjektiv
- 4: Linse
- 5: Senke
- 6: Befestigungsstift
- 7: Objektivdeckel / Gehäuse
- 8: Handhabe
- 9: Aussparung
- 10: Steg
- 11: Rückzugsrolle
- 12: Spiralfeder
- 13: Verbindungsschnur
- 14: Öffnung
- 15: Karabiner
- 16: zentrische Öffnung
- 17: Objektivdeckel / Gehäuse
- 18: erstes Verbindungselement
- 19: Gegenstück
- 20: Gehäuse
- 21: Objektivdeckel
- 22: Klettverbindung
- 23: Öffnung
- 24: Klebeschicht
- 25: Rückzugsrolle
- 26: Rückzugsrolle
- 27: Objektivdeckel / Gehäuse
- 28: Rückzugsrolle
- 29: Rückzugsrolle
- 30: zentrische Erhebung
- 31: Öffnung
- 32: dezentrale Öffnung
- 33: konische Fläche
- 34: zylindrische Fläche
- 35: Aufstandsfläche
- 36: dem Kameraobjektiv zugewandte Seite
- 37: Objektivdeckel / Gehäuse

## Patentansprüche

1. Objektivdeckel (17, 27) mit einer Rückzugsrolle (26, 29), wobei der Objektivdeckel (17, 27) zur Befestigung auf einem Kameraobjektiv (3) ausgebildet ist und in der auf dem Kameraobjektiv (3) befestigten Position der Objektivdeckel (17, 27) endseitig eine Linse des Kameraobjektivs (3) schützend abdeckt, und wobei die Rückzugsrolle (17, 27) mit einem in den Objektivdeckel (17, 27) integrierten Gehäuse (17, 27) zur Beaufschlagung einer an der Rückzugsrolle (26, 29) befestigten Verbindungsschnur (13) mit einer Rückzugskraft versehen ist und die Verbindungsschnur (13) an der im Gehäuse (17, 27) drehbar gehaltenen und vorgespannten Rückzugsrolle (26, 29) befestigt ist, wobei ein Kameraobjektiv auf den auf das Kameraobjektiv aufgesetzen Objektivdeckel (17, 27) aufstellbar ist und eine Aufstandsseite (35) des Gehäuses (17,27) dazu vorgesehen ist, auf einer ebenen Fläche stabil aufzuliegen, **dadurch gekennzeichnet dass** eine Öffnung (16,32) für die Verbindungsschnur (13) auf der Aufstandsseite (35) des Gehäuses (17,27) angeordnet ist.

2. Objektivdeckel (17, 27) nach Anspruch 1, wobei die Rückzugsrolle (26, 29) mittels eines Verbindungselementes (15) befestigbar ist.

3. Objektivdeckel (17, 27) nach Anspruch 2, wobei das Verbindungselement (15) ein Karabiner ist.

4. Objektivdeckel (27) nach einem der vorhergehenden Ansprüche, wobei die Rückzugsrolle (29) zentrisch im Objektivdeckel (27) angeordnet ist.

5. Objektivdeckel (17) nach einem der Ansprüche 1 bis 3, wobei die Rückzugsrolle (26) im Gehäuse (17) radial nach außen versetzt ist.

6. Objektivdeckel (17, 27) nach Anspruch 1, wobei die stabile Auflage des in den Objektivdeckel (17, 27) integrierten Gehäuses (17, 27) mittels eines Mehrfachkontaktes diverser Elemente gewährleistet wird.

7. Objektivdeckel (17, 27) nach Anspruch 6, wobei die diversen Elemente Stege (10) sind.

8. Kameraobjektiv (3) mit wenigstens einem Objektivdeckel (17, 27) nach einem der vorhergehenden Ansprüche.

## Claims

1. Objective cap (17, 27) comprising a retraction roller (26, 29), wherein the objective cap (17, 27) is adapted to be fastened on a camera objective (3) and, in the position when fastened on the camera objective (3), the objective cap (17, 27) covers a lens of the camera objective (3) at the end thereof in a protective manner, and wherein the retraction roller (17, 27) having a housing (17, 27) integrated in the objective cap (17, 27) is provided with a retraction force for acting on a connecting cord (13) fastened to the retraction roller (26, 29), and the connecting cord (13) is fastened to the retraction roller (26, 29) that is rotatably held and preloaded in the housing (17, 27), wherein a camera objective can be placed onto the objective cap (17, 27) that is attached to the camera objective, and a contact side (35) of the housing (17, 27) is provided to be supported on a flat surface in a stable manner, **characterized in that** an opening (16, 32) for the connecting cord (13) is arranged on the contact side (35) of the housing (17, 27) .

2. Objective cap (17, 27) according to claim 1, wherein the retraction roller (26, 29) can be fastened by means of a connecting element (15).

3. Objective cap (17, 27) according to claim 2, wherein the connecting element (15) is a carabiner.

4. Objective cap (27) according to any one of the preceding claims, wherein the retraction roller (29) is arranged centrically in the objective cap (27).

5. Objective cap (17) according to any one of claims 1 to 3, wherein the retraction roller (26) in the housing (17) is offset radially outwards.

6. Objective cap (17, 27) according to claim 1, wherein the stable support of the housing (17, 27) integrated in the objective cap (17, 27) is ensured by means of a multi-contact of various elements.

7. Objective cap (17, 27) according to claim 6, wherein the various elements are webs (10).

8. Camera objective (3) having at least one objective cap (17, 27) according to any one of the preceding claims.

## Revendications

1. Cache d'objectif (17, 27), avec un galet de retrait (26, 29), le cache d'objectif (17, 27) étant conçu pour être fixé sur un objectif (3) de caméra et dans la position fixée sur l'objectif (3) de caméra, le cache d'objectif (17, 27) recouvrant de manière protectrice une lentille de l'objectif (3) de caméra et le galet de retrait (17, 27) étant doté d'un boîtier (17, 27) intégré dans le cache d'objectif (17, 27), pour soumettre un cordon de liaison (13) fixé sur le galet de retrait (26, 29) à une force de retrait et le cordon de liaison (13) étant fixé sur le galet de retrait (26, 29) précontraint et maintenu de manière rotative dans le boîtier (17, 27), un objectif de caméra pouvant se poser sur le cache d'objectif (17, 27) placé sur l'objectif de caméra et un côté de contact (35) du boîtier (17, 27) étant prévu pour reposer de manière stable sur une surface plane, **caractérisé en ce qu'**un orifice (16, 32) pour le cordon de liaison (13) est placé sur le côté de contact (35) du boîtier (17, 27).

2. Cache d'objectif (17, 27) selon la revendication 1, le galet de retrait (26, 29) pouvant être fixé au moyen d'un élément de liaison (15).

3. Cache d'objectif (17, 27) selon la revendication 2, l'élément de liaison (15) étant un mousqueton.

4. Cache d'ojectif (27) selon l'une quelconque des revendications précédentes, le galet de retrait (29) étant placé de manière centrée dans le cache d'objectif (27).

5. Cache d'objectif (17) selon l'une quelconque des revendications 1 à 3, le galet de retrait (26) étant décalé dans le boîtier (17), en direction radiale vers l'extérieur.

6. Cache d'objectif (17, 27) selon la revendication 1, l'appui stable du boîtier (17, 27) intégré dans le cache d'objectif (17, 27) étant assuré au moyen d'un contact multiple entre divers éléments.

7. Cache d'objectif (17, 27) selon la revendication 6, les divers éléments étant des barrettes (10).

8. Objectif de caméra (3) avec au moins un cache d'objectif (17, 27) selon l'une quelconque des revendications précédentes.
